# EUROPEAN PATENT APPLICATION

(11) **EP 1 787 907 A2**
(43) Date of publication of application: **23.05.2007**
(21) Application number: 06023603.1
(22) Date of filing: 14.11.2006
(51) Int. Cl.: B64C 27/82

(54) **Emergency anti-torque device for a helicopter**

(30) Priority: 16.11.2005 GB 0523389; 24.02.2006 GB 0603737
(71) Applicant: Lloyd, Peter Gregory, 1, Tryhorn Drive Bishopsdown Farm Salisbury SPI 3WA (GB)
(72) Inventor: Lloyd, Peter Gregory, 1, Tryhorn Drive Bishopsdown Farm Salisbury SPI 3WA (GB)

(57) **Abstract**

The basic concept of the invention is to provide an auxiliary thrust mechanism that may be brought into action by the pilot or by an automatic on-board system that will allow the controlled flight to be maintained even after the loss of thrust from the tail rotor or fan for enough time under most circumstances for the pilot to bring the helicopter (1) in to a safe landing. The preferred method of this invention is to use a solid rocket motor (7) and a thrust vectoring device (8) that the pilot may control the thrust to counter the spinning tendency and guide the helicopter safely for a certain time.

## Description

### 1. Background.

The problem addressed by this invention is one experienced by operators of helicopters that incorporate a tail rotor or tail mounted thrust device such as a fan. Many helicopter crashes occur when the tail rotors or fans fail or are damaged by external objects striking them. When a helicopter loses the thrust from its tail rotor or fan the main body or fuselage of the helicopter will begin to rotate about the axis of the main rotor due to the natural tendency of the fuselage to spin in that direction because of basic mechanical reaction summarised by Newton's third law, namely For every action there is an equal and opposite reaction. The helicopter will begin to spin faster unless some force is applied to the tail or other fuselage component. When such uncontrolled spins occur following a failure of the tail rotor or fan the helicopter usually becomes uncontrollable and the pilot disoriented, the result usually being a crash when the helicopter reaches the ground or other object in its path.

### 2. The basic concept of the invention.

According to the present invention there is provided a device incorporating a solid rocket motor and thrust vector unit that allows the thrust of the solid rocket motor to be directed in the direction of the angled faces of the thrust vector control unit and with both the solid rocket motor and the deflector mounted on the tail of a helicopter such that the thrust may be used as an alternative to the thrust provided by the tail rotor of the helicopter in emergency situations where the thrust of the tail rotor is no longer available to control the direction of the helicopter in yaw.

The basic purpose of the invention is to provide an auxiliary thrust mechanism that may be brought into action by the pilot or by an automatic on-board system that will allow the controlled flight to be maintained even after the loss of thrust from the tail rotor or fan for enough time under most circumstances for the pilot to bring the helicopter in to a safe landing. The preferred method of this invention is to use a solid rocket motor and a thrust vectoring device that the pilot may control the thrust from the solid rocket motor to counter the spinning tendency and guide the helicopter safely for a certain time.

### 3. The Invention Described.

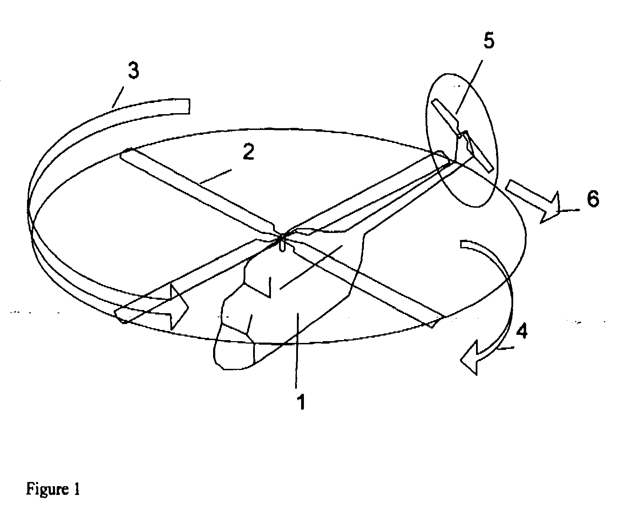

Figure 1 shows the situation for a helicopter with a tail rotor under normal circumstances. The helicopter fuselage, containing all the normal functioning internal parts such as engines, gear box, main rotor head, tail rotor drive take off and drive shaft together with fuel tanks , pilot controls and accommodation for the occupants of the helicopter is represented by 1 in the figure 1. The main rotor blades are represented by 2 and their direction of rotation in the case shown by the arrow 3. The reaction of the helicopter to the forces of the spinning main rotor blades is for the fuselage 1 to rotate in the direction shown by the arrow 4. The tail rotor 5 when spinning under normal circumstances produces a flow of air in the direction shown by arrow 6. This mass of air produces a reaction on the tail that counters the tendency of the helicopter fuselage to spin in direction of arrow 3.

When the tail rotor is not functioning correctly it is the lack of the air flow shown by arrow 6 that results in the emergency situation and creates the conditions where a crash is likely.

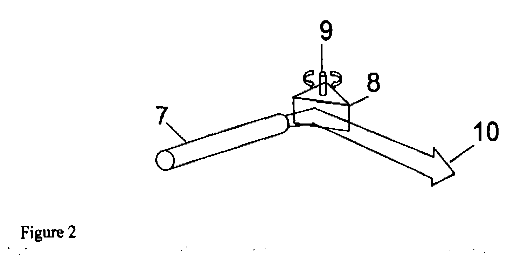

Figure 2 show the main components of the invention A solid rocket motor 7 and thrust vector control unit 8, which as can be seen from the figure is of triangular shape in plan, with the vertical faces set at an angle to each other, and an axel 9 are aligned such that the rocket exhaust 10 may be deflected by the angled faces of the deflector to the side as shown. This rocket exhaust is used as the auxiliary means of countering the tendency of the helicopter to spin about the axis of the main rotor. A plurality of rocket motors could be used in which the pilot may fire them in sequence so as to provide yaw control at different stages of the emergency recovery following the loss of tail rotor effectiveness.

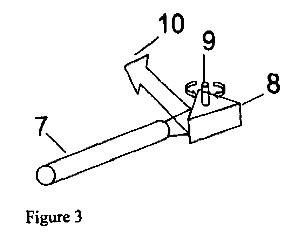

In figure 3 the thrust vector control unit has been rotated about the axel 9 so that now the rocket exhaust is to the other side. Such control of the thrust vector is desirable so that the pilot may rotate the helicopter in either direction prior to landing in order to allow any landing gear or skids that the helicopter is equipped with to be aligned with the direction of travel over the ground. This latter point being very great important since if the helicopter touches the ground with a horizontal motion present, which is very likely under the circumstances of the emergency, any sideways motion relative to the landing gear will possibly cause the helicopter to role over and therefore be damaged.

The rotation of the thrust vector unit in accordance with the pilots wishes can be accomplished in a variety of ways, such as the axel 9 being mechanically attached to the control mechanism used to control the thrust developed by the tail rotor under normal circumstances. The pilot applies pressure to the "rudder" peddles, also known as torque peddles, in the cockpit with his feet under normal circumstances and cables or rods are used to transmit this rotational motion to the tail section where it is used to change the pitch of the tail rotors and thus change the thrust generated by the tail, this in turn cause the tail of the helicopter to rotate in the direction desired by the pilot. In the emergency situation for which this invention is intended to be brought into use the cables and or rods used to change the pitch of the tail rotors could also be used to rotate the thrust vector unit 8 by being attached to the axel 9 via a horizontal lever, with the lever and the axel forming a 'T' shape and the cables being attached to the ends of the lever. Alternatively, the thrust vector axel 9 and lever may be moved by an entirely independent actuator which is powered by electrical current, pneumatic or hydraulic sources. The pilot in these later cases would have to operate a separate control within the cockpit which may or may not be activated via the rudder peddles. If not via the rudder peddles the alternate power sources for controlling the rotation of the thrust vector unit would require a control knob or switch to allow pilot control of the rocket thrust direction.

Also required, but not shown in the diagrams, would be an igniter to activate the rocket 7. This could take the form of a hot wire that melts when current is passed through it, an exploding bridge wire detonator or a spark generator, or other standard methods of setting off pyrotechnics devices remotely. The activation switch for the igniter would be placed within easy reach of the pilot.

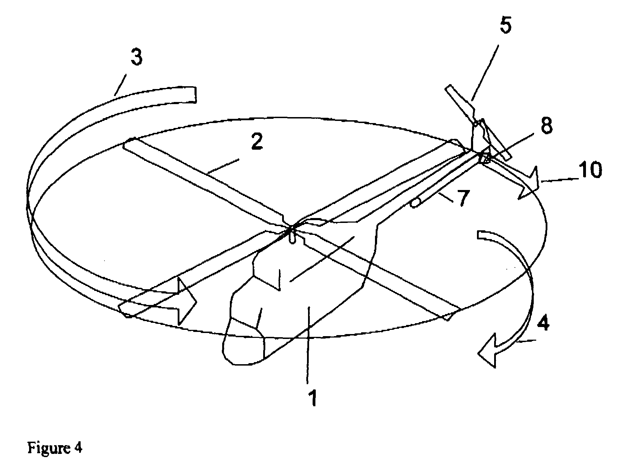

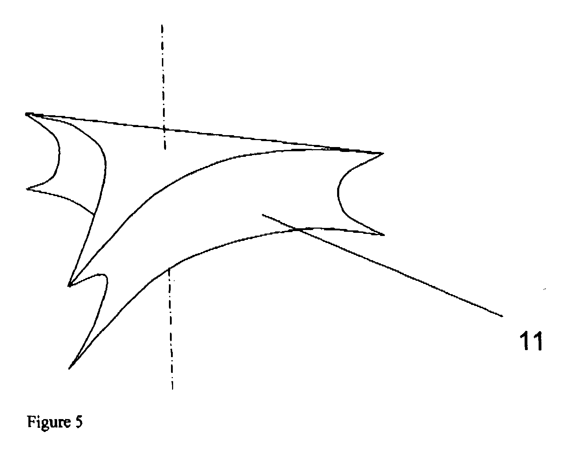

Figure 4 shows the invention attached to the tail of a helicopter and the rocket having been activated. The deflected rocket exhaust 10 is shown countering the tendency of the helicopter to spin without the functioning of its tail rotor 5. Figure 5 shows a diagram of an improved rocket plume deflector that collects and redirects the plume with a higher efficiency than the deflector shown in figure 3. This improved efficiency is expected because the rocket plume has a tendency to spread , out over the face of the deflector block and escape over the top and bottom edges of the face rather than simply bounce off it. The curvature on the improved deflector is shown a three dimensional curvature. Further improvements to the efficiency can be expected if cover plates are added on the top and bottom faces of the deflector. In extreme the deflector could be formed by two enclosed ducts that curve in a similar way to the vertical faces of the deflector shown in figure 5. This later configuration may suffer from thrust loss due to friction of the plume as passes the inner walls of the ducts. A similar frictional loss of thrust will be present in the curved wedge deflector shape of figure 5 but this is expected to be less of a loss than for a completely enclosed duct wall.
The consequence of a more efficient collection and deflection of the rocket plume is to permit a smaller and lighter rocket motor for a given impulse needed for safe flight of the helicopter following the loss of effectiveness of the tail rotor.

## Claims

1. A device incorporating a solid rocket motor or a plurality of rocket motors and a thrust vector unit that allows the thrust of the solid rocket motor to be directed in the direction of the angled faces of the thrust vector control unit and with both the solid rocket motor and the deflector mounted on the tail of a helicopter such that the thrust may be used as an alternative to the thrust provided by the tail rotor of the helicopter in emergency situations where the thrust of the tail rotor is no longer available to control the direction of the helicopter in yaw.

2. A device as defined in claim 1, wherein a remote igniter switch or control device within easy reach of the pilot of the helicopter such that the pilot may activate the rocket in the event that the tail rotor becomes inoperative or ineffective.

3. A device as defined in claim 1, wherein a thrust vector unit control input device within easy reach of the pilot or fitted as an integral part of the normal tail rotor control device or "Rudder Peddles" such that the pilots desire for changing the direction of motion or rotation of the tail of the helicopter may cause the rotation of the thrust vector unit about its directional axis and thus cause the rocket exhaust to be directed so as to force the helicopter tail to move as desired by the pilot has been used.

4. A device as defined in claim 1, wherein an alternative to tail rotor thrust for a helicopter that may be brought into action by an automatic system that may be fitted on the helicopter and may also be automatically controlled without pilot intervention.

5. A device as defined in claim 1, wherein the rocket plume deflector is shaped so that the vertical deflector faces of the wedge are curved so as to guide the rocket plume with greater efficiency and less loss over the edges of the deflector.
